# EUROPEAN PATENT SPECIFICATION

(11) **EP 1 316 763 B1**
(45) Date of publication and mention of the grant of the patent: **11.08.2004**
(21) Application number: 02080055.3
(22) Date of filing: 02.12.2002
(51) Int. Cl.: F24J 2/04, F24J 2/52

(54) **Mounting assembly for a ridge-mounted solar heater**
Montageanordnung für auf einem First montiertes Solarheizelement
Ensemble de montage pour un élément de chauffage solaire monté sur un faîte

(30) Priority: 03.12.2001 NL 1019475
(43) Date of publication of application: 04.06.2003
(73) Proprietor: Inventum Holding B.V., NL-3721 BC Bilthoven (NL)
(72) Inventor: Deckers, Johannes Henricus Petrus, 5737 JG Lieshout (NL)
(74) Representative: Iemenschot, Johannes Andreas, Ir.

(56) References cited:
- FR-A- 2 621 101
- NL-C- 1 004 031
- NL-C- 1 013 548
- PATENT ABSTRACTS OF JAPAN vol. 1998, no. 09, 31 July 1998 (1998-07-31) -& JP 10 089775 A (HAZAMA TAKAYUKI), 10 April 1998 (1998-04-10)
- PATENT ABSTRACTS OF JAPAN vol. 006, no. 260 (M-180), 18 December 1982 (1982-12-18) -& JP 57 153165 A (YOSHINAGA YOUGIYOU KK), 21 September 1982 (1982-09-21)

## Description

The invention relates to a mounting assembly for mounting a solar heater or the like on the ridge of a gabled roof, which solar heater comprises a housing enclosing the active components thereof, said housing consisting of a housing bottom and a housing cover detachably connected thereto, as disclosed in JP-A-10089775.

As the name already indicates, a ridge-mounted solar heater or the like is mounted on the ridge of a gabled roof. The active components of the solar heater (among which concentric cylindrical vessels) are enclosed by the housing, with the housing bottom abutting against the ridge of the roof and functioning as a support for the solar heater. The housing cover connected to the housing bottom protects the active components against external influences.

It is an object of the present invention to provide an improved mounting assembly for a ridge-mounted solar heater or the like.

Within this framework, the present invention provides a mounting assembly for mounting a solar heater or the like on the ridge of a gabled roof, which solar heater comprises a housing enclosing the active components thereof, which housing consists of a housing bottom and a housing cover detachably connected thereto, characterized in that the mounting assembly at least comprises:
- ridge brackets to be fixed to the ridge, which ridge brackets extend substantially horizontally under the housing bottom, transversely to the longitudinal direction of the ridge,
- two clamping sections adjoining the opposite ends of the ridge brackets, which clamping sections engage the housing cover, and
- two batten brackets likewise adjoining the opposite ends of the ridge brackets with a first end, which batten brackets can be fixed to the fixed roof construction beside the ridge with their second ends.

The ridge brackets make it possible to mount the solar heater provisionally in its position on top of the ridge. The solar heater is supported on said ridge brackets with its housing bottom. Various means may be used for fixing the ridge brackets to the ridge, for example screws which are screwed into the fixed roof construction. The clamping sections provide a solid connection of the housing cover to the housing bottom, so that the active components of the solar heater are enclosed in an effective manner. The batten brackets, finally, fix the ridge brackets and the clamping sections in position with respect to the roof in a reliable manner, so that the solar heater will maintain its position, even in extreme conditions (for example in the case of heavy wind loads).

As a result of the construction of the mounting assembly according to the invention, a solar heater can be mounted on the ridge of a gabled roof by a single person.

Preferably, the batten brackets are capable of deformation so as to adapt their shape to conform to varying roof slopes. In this way a solar heater can be mounted on roofs having different slopes, with only the shape of the batten brackets requiring adaptation.

Such deformability of the batten brackets can be effected in that the batten brackets comprise spaced-apart desired bending places, such as material weaknesses, recesses or the like. Depending on the geometry of the roof and of the ridge-mounted solar heater, a batten bracket can be bent into the desired shape at the location of a specific desired bending place. The presence of said desired bending places makes it easy to realise such a deformation, without heavy tools being required. In general it is even possible to bend the batten brackets by hand. If the clamping sections according to an advantageous embodiment are provided with hook members at their ends remote from the batten brackets for engaging counter hook members formed on the housing cover, said hook members can be easily connected to the housing cover without using specific tools and without using additional fastening elements, so that said housing cover can be pressed firmly against the housing bottom.

Within this framework it is furthermore to be preferred in that case that the clamping sections comprise a shoulder at a position opposite said hook members, which shoulder engages a counter shoulder formed on the housing bottom in a fully mounted position of the clamping sections so as to clamp the housing cover and the housing bottom together with the possible interposition of a sealing element. Such a combination of hook members and shoulder enables the clamping sections to clamp the housing bottom and the housing cover together without the ridge brackets having to exert a force on the clamping sections.

It is also possible within this framework for the hook members of the clamping sections and/or the counter hook members of the housing cover to extend substantially along the entire length of the housing cover. As a result, an even clamping force is generated along the entire length of the solar heater. In order to effect an optimum sealing of the housing of the solar heater, it is also possible for the hook members of the clamping sections and the counter hook members of the housing cover to engage each other with the interposition of a sealing member.

For technical reasons it is advantageous if each clamping section consists of a one-piece upper section engaging the housing cover and spaced-apart lower sections adjoining the ridge bracket. As a result of the use of spaced-apart lower sections, flow channels are formed between said lower sections, which flow channels can be utilised in ventilating the roof.

If, in addition to that, the upper section and the lower sections slidably (in the longitudinal direction of the ridge) engage each other, the position of the lower sections can be adapted to the geometry of the roof so as to simplify the mounting of the mounting assembly.

Such a slidable engagement can be realised, for example, in that the upper section and the lower sections comprise mating complementary longitudinal projections and longitudinal recesses.

With a view to achieving a further simplification of the mounting of the mounting assembly according to the invention, it is furthermore preferable for the ridge bracket, the clamping sections and the batten brackets to be movable with respect to each other in the longitudinal direction of the ridge. Such movability with respect to each other in the longitudinal direction of the ridge can be realised, for example, in that the clamping sections comprise a longitudinally extending slot at the location of their ends adjoining the ridge bracket, in which slot fastening elements can be received, whilst the ridge bracket and the batten brackets are provided with holes for receiving said fastening elements.

The fastening elements can move in the longitudinal direction within said slot, taking along the ridge brackets and the batten brackets.

The fastening elements may consist of bolts in that case, the heads of which bolts can be received in the aforesaid slot, and of nuts which can be screwed onto said bolts, thereby securing the ridge bracket and the batten brackets in position on a clamping section.

Furthermore it is advantageous if the clamping sections are provided with recesses for the passage therethrough of moisture discharge pipes extending to within the housing and/or for creating vent holes. Such moisture discharge pipes can vent the interior of the housing, whilst in addition to that moisture can be discharged in the case of leakage of one of the active components of the solar heater. If the recesses create vent holes, such vent holes, in combination with the interspaces between the spaced-apart lower sections that may be used, form flow channels for ventilating the roof.

The mounting assembly according to the present invention is generally used with roofs which are covered with tiles. In such a case it is advantageous if the clamping sections are provided with a connecting arrangement for the connection thereto of lead flaps that are to join the tiles.

Such a connecting arrangement may consist, for example, of longitudinal channels for receiving a thickened longitudinal edge of the lead flaps. Such longitudinal channels, in combination with the aforesaid thickened longitudinal edge, enable quick and reliable fitting of the lead flaps in a simple manner.

When a second longitudinal channel is formed above the aforesaid longitudinal channel, an additional lead flap can be provided at the butt joint, between lead flaps positioned adjacently to each other, so as to seal said butt joint.

Generally, ridge-mounted solar heaters are placed on the ridge of a tile-covered gabled roof in such a manner that the lead flaps that are present join the uppermost row of tiles. When such a ridge-mounted solar heater is used in renovation, however, it will be inevitable in many cases to remove the uppermost row of tiles as well when removing the ridge-tiles. Direct connection of the ridge-mounted solar heater according to the invention to the next row of tiles is hardly possible in that case, if at all. In order to provide a solution for this problem, the invention also provides a mounting assembly for use in renovation, in which an uppermost row of tiles adjoining the ridge is removed, which mounting assembly furthermore comprises an auxiliary plate to be connected to the aforesaid connecting arrangement for bridging the distance to the next row of tiles.

In such a case it is advantageous if the batten brackets have an extended second end for supporting the end of the auxiliary plate remote from the connecting arrangement. The extended second end of the batten brackets can be suitably deformed (for example bent) in such a manner that the auxiliary plate is placed in an optimum position.

In that case, the auxiliary plate may furthermore be provided with a secondary connecting arrangement for lead flaps at its end remote from the connecting arrangement. The lead flaps will join the aforesaid next row of tiles in a conventional manner again in that case.

When mounting the mounting assembly on the roof of a house it is often advantageous if supporting plates, for example wooden plates, are arranged between the fixed roof construction and the second ends of the batten brackets. Especially if the original roof boarding of old houses exhibits weak spots (rot and the like), direct connection of the batten brackets to the fixed roof construction may be problematic. Such weak spots can be strengthened in a simple yet efficient manner by using such supporting plates.

The mounting assembly according to the invention can be used with a ridge-mounted solar heater or the like consisting of a number of units arranged in side-by-side relationship in the longitudinal direction of the ridge, with interspaces being present between the housing covers. In such a case the mounting assembly according to the invention may be provided with sight covers bridging said interspaces, as well as with end covers joining the ridge, which are mounted on the free ends of the outermost units.

The invention will be explained in more detail hereinafter with reference to the drawing, which shows an embodiment of the mounting assembly.
Figure 1 is a partial cross-sectional view of the ridge area of the roof, on which a solar heater is mounted by means of a mounting assembly according to the invention; and
Figure 2 is a larger-scale view of the area indicated at II in Fig. 1.

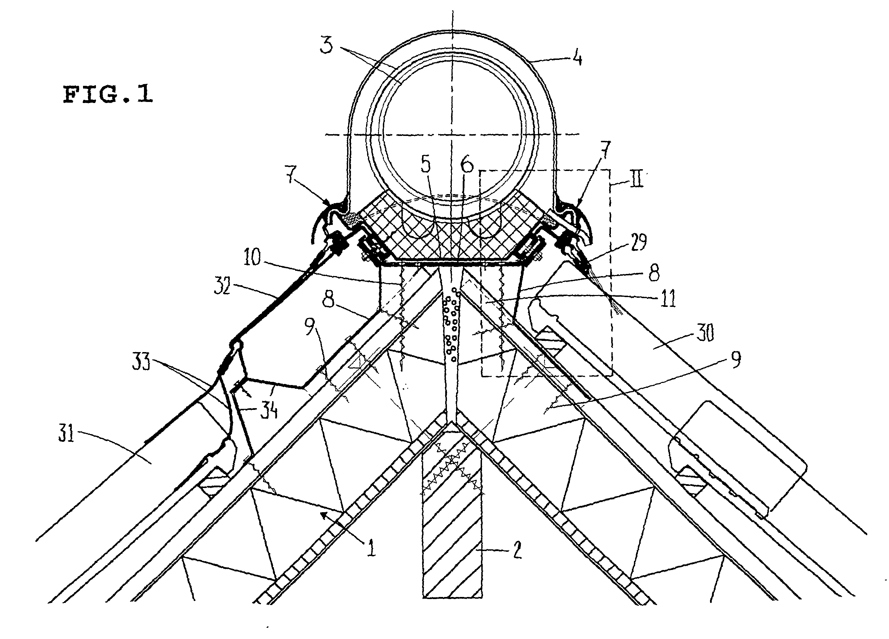

Referring to Fig. 1, the ridge area of a roof is shown. The figure shows the fixed roof construction 1 and the ridge beam 2 of the roof. A so-called ridge-mounted solar heater is mounted on the ridge of the roof. Briefly put, said solar heater comprises internally active components (among which two concentric cylindrical bodies 3), which are enclosed by a housing consisting of a housing cover 4 and a housing bottom 5 joining said housing cover. The details of such a ridge-mounted solar heater are known and fall outside the scope of the present invention, so that they will not be discussed in more detail herein.

A mounting assembly consisting of a number of parts, viz. ridge brackets 6, clamping sections 7 and batten brackets 8, is used for mounting the solar heater on the ridge of the roof.

The ridge brackets 6 are fixed in a horizontal position to the ridge of the roof by means of fastening elements 10 (screws, for examples). Said ridge brackets 6 extend transversely to the longitudinal direction of the ridge, and ridge brackets 6 lying adjacently to each other are arranged in spaced-apart relationship. The ridge brackets 6 form a supporting surface for the housing bottom 5 of the solar heater. After the ridge brackets 6 have been fixed to the roof, the solar heater can already be provisionally mounted on the ridge. This makes it easier for one person to mount the solar heater.

Clamping sections 7 engaging the housing cover 4 join the opposite ends of the ridge brackets 6. The batten brackets 8, too, join the aforesaid opposite ends of the ridge brackets 6, which batten brackets can furthermore be fixed to the fixed roof construction 1 beside the ridge. This can be done by means of the fastening elements 9 (such as screws), which are fixed to a part of the fixed roof construction (such as battens or tile laths), in which case supporting plates 11, for example wooden plates, are arranged between the fixed roof construction 1 and the batten brackets 8.

The batten brackets 8 are deformable (for example as a result of being provided with spaced-apart, desired bending places, such as material weaknesses, recesses or the like), which enables the batten brackets to adapt their shape to varying roof slopes. In this way it is possible to use one and the same type of batten bracket for roofs having different slopes.

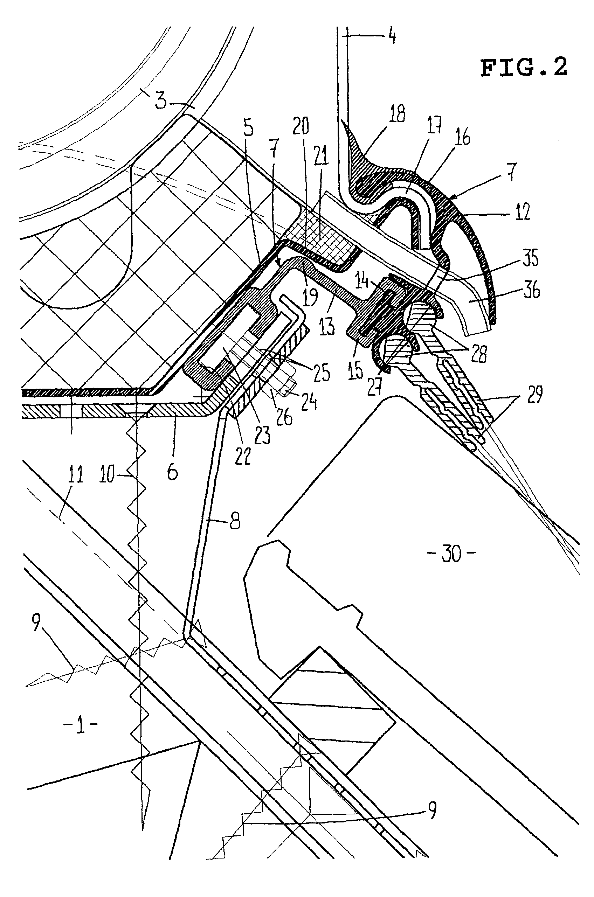

For a detailed description of, among others, the shape of the clamping sections 7, reference is now made to Fig. 2. In the illustrated embodiment, each clamping section 7 consists of an upper section 12 (preferably extending as a one-piece unit along the entire length of the solar heater) and a number of lower sections 13 arranged in spaced-apart relationship in the longitudinal direction of the ridge. The upper section 12 and the lower sections 13 have mating, complementary longitudinal projections 14 and 15, respectively, as a result of which the upper section 12 and the lower sections 13 movably interlock in the longitudinal direction of the ridge.

The upper section 12 is provided with a hook member 16 for engaging counter hook members 17 of the housing cover 4. A sealing member 18 is placed between the hook member 16 and the counter hook member 17 in the illustrated embodiment.

The lower section 13 is provided with a shoulder 19 positioned opposite the hook member 16 on the upper section 12, which shoulder is capable of engaging a counter shoulder 20 formed on the housing bottom 5. When the upper section 12 and the lower sections 13 are combined to form the clamping section 7, the hook member 16 and the shoulder 19 effect a firm abutting engagement between the housing cover 4 and the housing bottom 5. A sealing member 21 may be disposed between the housing cover 4 and the housing bottom 5. Usually, the hook members 16 of the upper section 12 and the counter hook members 17 of the housing cover 4 will extend along the entire length of the housing cover 4. This is not necessary, however.

In order to make it easier to mount a solar heater on the ridge of the roof by means of the mounting assembly according to the invention, the ridge bracket 6, the clamping sections 7 and the batten brackets 8 are movable relative to each other in the longitudinal direction of the ridge. To this end, the clamping sections 7 (in particular the lower sections 13) are provided with a slot 22 extending in longitudinal direction, in which the head 23 of a bolt 24 is slidably accommodated. The bolt 24 extends through holes 25 of the ridge brackets 6 and the batten brackets 8, and it is secured by means of a nut 26. The clamping section 7, the ridge bracket 6 and the batten bracket 8 are firmly interconnected by tightening the nut 26.

The upper sections 12 are provided with two longitudinal channels 27 positioned one above the other. Said longitudinal channels comprise thickened longitudinal edges 28 consisting of lead flaps 29. Said lead flaps 29 join the uppermost row of tiles 30 of the roof in a manner which is known per se. The upper lead flap 29, seen in Fig. 2, is intended to overlap butt joints between adjacent, underlying lead flaps 29.

Referring to Fig. 1 again, the right-hand side thereof shows the situation in which the lead flaps 29 abut on the uppermost row of tiles 30. When a solar heater of the present type is used in renovation, however, it is frequently necessary to remove said row of tiles 30. Only the next row of tiles 31 will be present in such a case, as is indicated on the left-hand side in Fig. 1. In such a case an auxiliary plate 32 is connected to the longitudinal channels 27 of the clamping sections 7, which plate is provided with a corresponding longitudinal channel at its opposite end, in which a lead flap 33 can be received. The batten brackets 8 that are used on said left-hand side of the roof have an extended second end 34 in this case, which functions to support the auxiliary plate 32.

As is shown in Fig. 2, the clamping sections 7, in particular the upper sections 12 thereof, are provided with recesses 35. Moisture discharge pipes 36 extend through said recesses, which pipes terminate within the housing of the solar heater. The dimension of the recesses 35 is such that sufficient space remains beside the moisture discharge pipes 36 for creating vent holes. In this way the roof space can be ventilated via the spaces between longitudinally adjacent lower sections 13 and through said vent holes.

Seen in a direction perpendicularly to the plane of the drawing of Figs. 1 and 2, the solar heater may consist of a number of units arranged in side-by-side relationship. Generally, interspaces will be present between the housing covers 4 of such units in that case. Said interspaces may be bridged by sight covers (not shown), whilst the free ends of the outermost units may be provided with end covers joining the ridge of the roof.

The invention is not limited to the embodiment as described above, which can be varied in several ways within the scope of the invention as defined in the claims. Thus, a solar heat collector of a conventional type or photovoltaic cells may be used as alternatives for the ridge-mounted solar heater.

## Claims

1. A mounting assembly for mounting a solar heater (3) or the like on the ridge of a gabled roof (1), which solar heater (3) comprises a housing enclosing the active components thereof, which housing consists of a housing bottom (5) and a housing cover (4) detachably connected thereto, **characterized in that** the mounting assembly at least comprises:
- ridge brackets (6) to be fixed to the ridge, which ridge brackets (6) extend substantially horizontally under the housing bottom (5), transversely to the longitudinal direction of the ridge,
- two clamping sections (7) adjoining the opposite ends of the ridge brackets (6), which clamping sections (7) engage the housing cover (4), and
- two batten brackets (8) likewise adjoining the opposite ends of the ridge brackets (6) with a first end, which batten brackets (8) can be fixed to the fixed roof construction (1) beside the ridge with their second ends.

2. A mounting assembly according to claim 1, wherein the batten brackets (8) are capable of deformation so as to adapt their shape to conform to varying roof (1) slopes.

3. A mounting assembly according to claim 2, wherein the batten brackets (8) comprise spaced-apart desired bending places, such as material weaknesses, recesses or the like.

4. A mounting assembly according to any one of the preceding claims, wherein the clamping sections (7) are provided with hook members (16) at their ends remote from the batten brackets (8) for engaging counter hook members (17) formed on the housing cover (4).

5. A mounting assembly according to claim 4, wherein the clamping sections (7) comprise a shoulder (19) at a position opposite said hook members (16), which shoulder (19) engages a counter shoulder (20) formed on the housing bottom (5) in a fully mounted position of the clamping sections (7) so as to clamp the housing cover (4) and the housing bottom (5) together with the possible interposition of a sealing element (21).

6. A mounting assembly according to claim 4 or 5, wherein the hook members (16) of the clamping sections (7) and/or the counter hook members (17) of the housing cover (4) extend substantially along the entire length of the housing cover (4).

7. A mounting assembly according to claim 4, 5 or 6, wherein the hook members (16) of the clamping sections (7) and the counter hook members (17) of the housing cover (4) engage each other with the interposition of a sealing member (18).

8. A mounting assembly according to any one of the preceding claims, wherein each clamping sections (7) consists of a one-piece upper section (12) engaging the housing cover (4) and a number of spaced-apart lower sections (13) adjoining the ridge bracket (6).

9. A mounting assembly according to claim 8, wherein said upper section (12) and said lower sections (13) slidably engage each other in the longitudinal direction of the ridge.

10. A mounting assembly according to claim 9, wherein said upper section (12) and said lower sections (13) comprise mating complementary longitudinal projections and longitudinal recesses (35).

11. A mounting assembly according to any one of the preceding claims, wherein the ridge bracket (6) the clamping sections (7) and the batten brackets (8) are movable with respect to each other in the longitudinal direction of the ridge.

12. A mounting assembly according to claim 11, wherein the clamping sections (7) comprise a longitudinally extending slot (22) at the location of their ends adjoining the ridge bracket (6), in which slot (22) fastening elements can be received, whilst the ridge bracket (6) and the batten brackets (8) are provided with holes (25) for receiving said fastening elements.

13. A mounting assembly according to claim 12, wherein said fastening elements consist of bolts (24), the heads (23) of which bolts (24) can be received in the aforesaid slot (22), and of nuts (26) which can be screwed onto said bolts (24), thereby securing the ridge bracket (6) and the batten brackets (8) in position on a clamping section (7).

14. A mounting assembly according to any one of the preceding claims, wherein the clamping sections (7) are provided with recesses (35) for the passage therethrough of moisture discharge pipes (36) extending to within the housing and/or for creating vent holes.

15. A mounting assembly according to any one of the preceding claims for use with roofs (1) which are covered with tiles (30), wherein the clamping sections (7) are provided with a connecting arrangement for the connection thereto of lead flaps (29) that are to join the tiles (30).

16. A mounting assembly according to claim 15, wherein said connecting arrangement consists of longitudinal channels (27) for receiving a thickened longitudinal edge (28) of the lead flaps (29).

17. A mounting assembly according to claim 16, wherein each clamping section (7) comprises two longitudinal channels (27) positioned one above the other.

18. A mounting assembly according to claim 15 or 16 for use in renovation, in which an uppermost row of tiles (30) adjoining the ridge is removed, which mounting assembly furthermore comprises an auxiliary plate (32) to be connected to the aforesaid connecting arrangement for bridging the distance to the next row of tiles (30).

19. A mounting assembly according to claim 18, wherein the batten brackets (8) have an extended second end for supporting the end of the auxiliary plate (32) remote from the connecting arrangement.

20. A mounting assembly according to claim 18 or 19, wherein the auxiliary plate (32) is provided with a secondary connecting arrangement for lead flaps (33) at its end remote from the connecting arrangement.

21. A mounting assembly according to any one of the preceding claims, wherein supporting plates, for example wooden plates, are arranged between the fixed roof construction and the second ends of the batten brackets (8).

22. A mounting assembly according to any one of the preceding claims for use with a ridge-mounted solar heater (3) or the like, consisting of a number of units arranged in side-by-side relationship in the longitudinal direction of the ridge, with interspaces being present between the housing covers (4), provided with sight covers bridging said interspaces, as well as with end covers joining the ridge, which are mounted on the free ends of the outermost units.

## Patentansprüche

1. Montagebaugruppe zum Montieren einer Solar-Heizeinrichtung (3) oder dergleichen auf dem First eines Giebeldachs (1), wobei die Solar-Heizeinrichtung (3) ein Gehäuse umfasst, das die aktiven Bauteile derselben umschließt, und das Gehäuse aus einem Gehäuseboden (5) und einer Gehäuseabdeckung (4) besteht, die lösbar damit verbunden ist, **dadurch gekennzeichnet, dass** die Montagebaugruppe wenigstens umfasst:
Firsthalterungen (6), die an dem First zu befestigen sind, wobei sich die Firsthalterungen (6) im Wesentlichen horizontal unter dem Gehäuseboden (5) quer zur Längsrichtung des Firsts erstrecken,
zwei Klemmabschnitte (7), die an die einander gegenüberliegenden Enden der Firsthalterungen (6) angrenzen, wobei die Klemmabschnitte (7) mit der Gehäuseabdeckung (4) in Eingriff kommen, und
zwei Dachlattenhalterungen (8), die mit einem ersten Ende gleichfalls an die einander gegenüberliegenden Enden der Firsthalterungen (6) angrenzen, wobei die Dachlattenhalterungen (8) mit ihren zweiten Enden an der stationären Dachkonstruktion (1) neben dem First befestigt werden können.

2. Montagebaugruppe nach Anspruch 1, wobei die Dachlattenhalterungen (8) sich so verformen können, dass sie ihre Form so ändern, dass sie unterschiedlichen Dachneigungen (1) entspricht.

3. Montagebaugruppe nach Anspruch 2, wobei die Dachlattenhalterungen (8) beabstandete Stellen gewünschter Biegung, so beispielsweise Materialverdünnungen, Aussparungen oder dergleichen, umfassen.

4. Montagebaugruppe nach einem der vorangehenden Ansprüche, wobei die Klemmabschnitte (7) an ihren von den Dachlattenhalterungen (8) entfernten Enden mit Hakenelementen (16) zum Eingriff mit Gegen-Hakenelementen (17) versehen sind, die an der Gehäuseabdeckung (4) ausgebildet sind.

5. Montagebaugruppe nach Anspruch 4, wobei die Klemmabschnitte (7) einen Absatz (19) an einer Position gegenüber den Hakenelementen (16) umfassen und der Absatz (19) mit einem Gegen-Absatz (20), der an dem Gehäuseboden (5) ausgebildet ist, in einer vollständig montierten Position der Klemmabschnitte (7) in Eingriff kommt, um so die Gehäuseabdeckung (4) und den Gehäuseboden (5) bei möglicher Einfügung eines Dichtungselementes (21) zusammenzuklemmen.

6. Montagebaugruppe nach Anspruch 4 oder 5, wobei die Hakenelemente (16) der Klemmabschnitte (7) und/oder die Gegen-Hakenelemente (17) der Gehäuseabdeckung (4) sich im Wesentlichen über die gesamte Länge der Gehäuseabdeckung (4) erstrecken.

7. Montagebaugruppe nach Anspruch 4, 5 oder 6, wobei die Hakenelemente (16) der Klemmabschnitte (7) und die Gegen-Hakenelemente (17) der Gehäuseabdeckung (4) miteinander bei Einfügung eines Dichtungselementes in Eingriff sind.

8. Montagebaugruppe nach einem der vorangehenden Ansprüche, wobei jeder Klemmabschnitt (7) aus einem aus einem Stück bestehenden oberen Abschnitt (12), der mit der Gehäuseabdeckung (4) in Eingriff ist, und einer Anzahl beabstandeter unterer Abschnitte (13) besteht, die an die Firsthalterung (6) angrenzen.

9. Montagebaugruppe nach Anspruch 8, wobei der obere Abschnitt (12) und die unteren Abschnitte (13) in der Längsrichtung des Firsts gleitend miteinander in Eingriff sind.

10. Montagebaugruppe nach Anspruch 9, wobei der obere Abschnitt (12) und die unteren Abschnitte (13) ineinander passende komplementäre Längsvorsprünge und Längsaussparungen (35) umfassen.

11. Montagebaugruppe nach einem der vorangehenden Ansprüche, wobei die Firsthalterung (6), die Klemmabschnitte (7) und die Dachlattenhalterungen (8) in Bezug zueinander in der Längsrichtung des Firsts bewegt werden können.

12. Montagebaugruppe nach Anspruch 11, wobei die Klemmabschnitte (7) einen in Längsrichtung verlaufenden Schlitz (22) an der Position ihrer Enden, die an die Firsthalterung (6) angrenzen, umfassen, und wobei in dem Schlitz (22) Befestigungselemente aufgenommen werden können, während die Firsthalterung (6) und die Dachlattenhalterungen (8) mit Löchern (25) zum Aufnehmen der Befestigungselemente versehen sind.

13. Montagebaugruppe nach Anspruch 12, wobei die Befestigungselemente aus Schrauben (24), wobei die Köpfe (23) der Schrauben (24) in dem Schlitz (22) aufgenommen werden können, sowie aus Muttern (26) bestehen, die auf die Schrauben (24) aufgeschraubt werden können, um so die Firsthalterung (6) und die Dachlattenhalterungen (8) an einem Klemmabschnitt (7) zu befestigen.

14. Montagebaugruppe nach einem der vorangehenden Ansprüche, wobei die Klemmabschnitte (7) mit Aussparungen (35) versehen sind, durch die Feuchtigkeitsableitrohre (36) hindurchtreten, die sich in das Innere des Gehäuses erstrecken, und/oder die Entlüftungslöcher schaffen.

15. Montagebaugruppe nach einem der vorangehenden Ansprüche zum Einsatz bei Dächern (1), die mit Dachziegeln (30) gedeckt sind, wobei die Klemmabschnitte (7) mit einer Verbindungsanordnung für die Verbindung derselben mit Haltelaschen (29) versehen sind, die die Dachziegel (30) verbinden sollen.

16. Montagebaugruppe nach Anspruch 15, wobei die Verbindungsanordnung aus Längsrinnen (27) zur Aufnahme einer verdickten Längskante (28) der Haltelaschen (29) bestehen.

17. Montagebaugruppe nach Anspruch 16, wobei jeder Klemmabschnitt (7) zwei Längsrinnen (27) umfasst, die übereinander angeordnet sind.

18. Montagebaugruppe nach Anspruch 15 oder 16 zum Einsatz bei der Überholung, wobei eine oberste Reihe von Dachziegeln (30) an den First angrenzend entfernt wird und die Montagebaugruppe des Weiteren eine Hilfsplatte (32) umfasst, die mit der Verbindungsanordnung zu verbinden ist, um den Abstand zu der nächsten Reihe von Dachziegeln (30) zu überbrücken.

19. Montagebaugruppe nach Anspruch 18, wobei die Dachlattenhalterungen (8) ein verlängertes zweites Ende haben, das das Ende der Hilfsplatte (32) von der Verbindungsanordnung entfernt trägt.

20. Montagebaugruppe nach Anspruch 18 oder 19, wobei die Hilfsplatte (32) mit einer sekundären Verbindungsanordnung für Haltelaschen (33) an ihrem von der Verbindungsanordnung entfernten Ende versehen ist.

21. Montagebaugruppe nach einem der vorangehenden Ansprüche, wobei Trageplatten, beispielsweise Holzplatten, zwischen der stationären Dachkonstruktion und den zweiten Enden der Dachlattenhalterungen (8) angeordnet sind.

22. Montagebaugruppe nach einem der vorangehenden Ansprüche zum Einsatz mit einer am First montierten Solar-Heizeinrichtung (3) oder dergleichen, die aus einer Anzahl von Einheiten besteht, die in der Längsrichtung des Firsts nebeneinander angeordnet sind, wobei Zwischenräume zwischen den Gehäuseabdeckungen (4) vorhanden sind, die mit Sichtabdeckungen versehen sind, die die Zwischenräume überbrücken, sowie mit Endabdeckungen, die sich an den First anschließen und an den freien Enden der äußersten Einheiten angebracht sind.

## Revendications

1. Ensemble de montage d'un dispositif (3) de chauffage solaire ou analogue sur l'arête d'un toit (1) à pignon, dispositif (3) de chauffage solaire qui comporte un boîtier enfermant ses composants actifs, boîtier qui est constitué d'un fond (5) de boîtier et d'un couvercle (4) de boîtier qui est relié de manière amovible au fond, **caractérisé en ce que** l'ensemble de montage comporte au moins :
- des pattes d'attache (6) de rebord destinées à être fixées au rebord, pattes (6) d'attache de rebord qui s'étendent sensiblement horizontalement sous le fond (5) de boîtier, transversalement à la direction longitudinale de l'arête,
- deux sections (7) de serrage contiguës aux extrémités opposées des pattes (6) d'attache d'arête, sections (7) de serrage qui coopèrent avec le couvercle (4) du boîtier, et
- deux pattes (8) d'attache de lattes contiguës de la même manière aux extrémités opposées des pattes (6) d'attache d'arête par une première extrémité, ces pattes (8) d'attache de lattes pouvant être fixées à la structure fixe (1) de toit en-dessous de l'arête par leurs deuxièmes extrémités.

2. Ensemble de montage suivant la revendication 1, dans lequel les pattes (8) d'attache de lattes sont aptes à se déformer de manière à adapter leur forme pour se conformer à diverses pentes de toit (1).

3. Ensemble de montage suivant la revendication 2, dans lequel les pattes (8) d'attache de lattes comportent des emplacements de courbure souhaités à distance les uns des autres, tels que des affaiblissements de matière, des évidements ou analogues.

4. Ensemble de montage suivant l'une quelconque des revendications précédentes, dans lequel les sections (7) de serrage sont munies d'éléments (16) à crochet à leurs extrémités à distance des pattes (8) d'attache de lattes pour coopérer avec des éléments (17) antagonistes formés sur le couvercle (4) de boîtier.

5. Ensemble de montage suivant la revendication 4, dans lequel les sections (7) de serrage comportent un épaulement (19) en une position en face des éléments (16) à crochets, épaulement (19) qui coopère avec un contre-épaulement (20) formé sur le fond (5) de boîtier dans une position complètement montée des sections (7) de serrage de manière à serrer le couvercle (4) de boîtier et le fond (5) de boîtier ensemble avec interposition possible d'un élément (21) d'étanchéité.

6. Ensemble de montage suivant la revendication 4 ou 5, dans lequel les éléments (16) de crochet des sections (7) de serrage et/ou les éléments (17) antagonistes de crochet du couvercle (4) de boîtier s'étendent sensiblement sur toute la longueur du couvercle (4) de boîtier.

7. Ensemble de montage suivant la revendication 4, 5 ou 6, dans lequel les éléments (16) de crochet des sections (7) de serrage et les éléments (17) antagonistes de crochet du couvercle (4) de boîtier coopèrent mutuellement avec l'interposition d'un élément (18) d'étanchéité.

8. Ensemble de montage suivant l'une quelconque des revendications précédentes, dans lequel chaque section (7) de serrage est constituée d'une section (12) supérieure d'une pièce coopérant avec le couvercle (4) de boîtier et d'un certain nombre de sections (13) inférieures à distance les unes des autres contiguës aux pattes (6) d'attache d'arête.

9. Ensemble de montage suivant la revendication 8, dans lequel la section (12) supérieure et la section (13) inférieure coopèrent mutuellement par coulissement dans la direction longitudinale de l'arête.

10. Ensemble de montage suivant la revendication 9, dans lequel la section (12) supérieure et la section (13) inférieure comportent des saillies longitudinales et des évidements (35) longitudinaux qui s'adaptent par complémentarité de formes.

11. Ensemble de montage suivant l'une quelconque des revendications précédentes, dans lequel la patte (6) d'attache d'arête, les sections (7) de serrage et les pattes (8) d'attache de lattes sont mobiles les unes par rapport aux autres dans la direction longitudinale de l'arête.

12. Ensemble de montage suivant la revendication 11, dans lequel les sections (7) de serrage comportent une fente (22) s'étendant de manière longitudinale à l'emplacement de leurs extrémités contiguës aux pattes (6) d'attache d'arête, fente (22) dans laquelle des éléments de fixation peuvent être reçus, tandis que la patte (6) d'attache d'arête et les pattes (8) d'attache de lattes sont munies de trous (25) pour recevoir les éléments de fixation.

13. Ensemble de montage suivant la revendication 12, dans lequel les éléments de fixation sont constitués de boulons (24), les têtes (23) des boulons (24) pouvant être reçues dans la fente (22) mentionnée précédemment, et sont également constitués d'écrous (26) qui peuvent être vissés sur les boulons (24) pour ainsi fixer la patte (6) d'attache d'arête et les pattes (8) d'attache de lattes en position sur une section (7) de serrage.

14. Ensemble de montage suivant l'une quelconque des revendications précédentes, dans lequel les sections (7) de serrage sont munies d'évidements (35) pour le passage par celles-ci de tuyaux (36) de d'évacuation d'humidité s'étendant vers l'intérieur du boîtier et/ou pour former des trous d'aération.

15. Ensemble de montage suivant l'une quelconque des revendications précédentes à utiliser avec des toits (1) qui sont recouverts de tuiles (30), les sections (7) de serrage étant munies d'un agencement d'assemblage pour y assembler des volets (29) d'attaque, qui sont destinés à réunir les tuiles (30).

16. Ensemble de montage suivant la revendication 15, dans lequel l'agencement d'assemblage est constitué de canaux (27) longitudinaux pour recevoir un bord (28) longitudinal épaissi des volets (29) d'attaque.

17. Ensemble de montage suivant la revendication 16, dans lequel chaque section (7) de serrage comporte deux canaux (27) longitudinaux positionnés l'un au-dessus de l'autre.

18. Ensemble de montage suivant la revendication 15 ou 16 à utiliser pour la rénovation, dans lequel une rangée la plus supérieure de tuiles (30) contiguë à l'arête est retirée, l'ensemble de montage comportant, en outre, une plaque (32) auxiliaire à assembler à l'agencement d'assemblage mentionné précédemment pour recouvrir la distance jusqu'à la rangée suivante de tuiles (30).

19. Ensemble de montage suivant la revendication 18, dans lequel les pattes (8) d'attache de lattes ont une deuxième extrémité prolongée pour supporter l'extrémité de la plaque (32) auxiliaire à distance de l'agencement d'assemblage.

20. Ensemble de montage suivant la revendication 18 ou 19, dans lequel la plaque (32) auxiliaire est munie d'un deuxième agencement de connexion pour des volets (33) d'attaque à son extrémité à distance de l'agencement d'assemblage.

21. Ensemble de montage suivant l'une quelconque des revendications précédentes, dans lequel des plaques de support, par exemple des plaques en bois, sont disposées entre la structure de toit fixe et les deuxièmes extrémités et des pattes (8) d'attache de lattes.

22. Ensemble de montage suivant l'une quelconque des revendications précédentes à utiliser avec un dispositif (3) de chauffage solaire monté sur arête ou analogue, constitué d'un certain nombre d'unités agencées suivant une relation côte à côte dans la direction longitudinale de l'arête, des intervalles étant présents entre les couvercles (4) de boîtier, munis de hublots qui recouvrent les intervalles, ainsi que de capots d'extrémité effectuant la jonction avec l'arête, qui sont montés sur l'extrémité libre des unités les plus extérieures.
